# EUROPÄISCHE PATENTANMELDUNG

(11) **EP 4 794 145 A1**
(43) Veröffentlichungstag der Anmeldung: **19.08.2026**
(21) Anmeldenummer: 25157519.7
(22) Anmeldetag: 12.02.2025
(51) Int. Cl.: H02G 3/06, H01R 9/05, H01R 13/24, H01R 13/6582, H01R 13/6592

(54) **KABELVERSCHRAUBUNG MIT EINEM SCHIRMKONTAKTMODUL**

(71) Anmelder: Lapp Engineering AG, 6330 Cham (CH)
(72) Erfinder: MÜLLER, Daniel, 71686 Remseck (DE)
(74) Vertreter: Rutz & Partner

(57) **Zusammenfassung**

Die Kabelverschraubung (1), die zur Durchführung eines mit einer Kabelabschirmung (82) versehenen Kabels (8) entlang einer Mittelachse (x) durch eine Montageöffnung (90) in einer Montagewand (9) vorgesehen ist, umfasst
- einen einteiligen oder mehrteiligen Montagestutzen (11), der einen der Durchführung des Kabels (8) dienenden Stutzenkanal (110), ein mit einem ersten Aussengewinde (1111) versehenes erstes Anschlussteil (111) und ein mit einem zweiten Aussengewinde (1112) versehenes zweites Anschlussteil (1121) umfasst, und der mit der Montagewand (9) verbindbar ist,
- eine Hutmutter (11), die einen der Durchführung des Kabels (8) dienenden Hutkanal (110), eine Andruckkappe (121) und einen Ringflansch (122) mit einem Innengewinde (112), das zum zweiten Aussengewinde (1112) des Montagestutzens (11) korrespondiert, aufweist,

eine Fixierungsvorrichtung (13), mittels der das durchgeführte Kabel (8) vorzugsweise dicht abschliessend fixierbar ist, und
ein Schirmkontaktmodul (14), das innerhalb des Stutzenkanals (110) angeordnet ist, das ein ringförmiges oder hohlzylindrisches Trägerteil (140) und mehrere mit dem Trägerteil (140) verbundene Kontaktelemente (141) aufweist, die in den Stutzenkanal (110) hineinragen und zur Kontaktierung der Kabelabschirmung (82) des Kabels (8) vorgesehen sind.

Erfindungsgemäss ist vorgesehen, dass die Kontaktelemente (141) als Kontaktzungen (141) ausgebildet sind, die je einen Zungenhals (1411), der mit dem Trägerteil (140) verbunden ist, und einen an den Zungenhals (1411) anschliessenden Zungenkopf (1412) aufweisen, der eine Zungenwanne mit einem Wannenraum (1410) bildet, der gegen die Mittelachse (x) hin verschlossen ist und der durch einen der Mittelachse (x) zugewandten Wannenboden (14101) und eine an den Wannenboden (14101) anschliessende und in sich geschlossenen Wannenwand (14102) begrenzt ist.

## Beschreibung

Die Erfindung betrifft eine Kabelverschraubung zur Durchführung eines Kabels, dass eine Kabelabschirmung aufweist, durch eine Montageöffnung in einer Montagewand mit einem Schirmkontaktmodul, mittels dessen die Kabelabschirmung des Kabels kontaktierbar ist.

Kabelverschraubungen oder Kabeldurchführungen erlauben es, Kabel durch Wände und Gehäuse von elektrischen Schaltschränken, elektrischen Geräten und dergleichen hindurchzuführen. Zweck der Kabelverschraubung ist die Vermeidung von Beschädigungen des Kabels im Bereich der Durchführung sowie die zug- und druckfeste Befestigung des Kabels bezüglich der Montagewand. Zudem gewährleisten Kabelverschraubungen je nach situationsbedingten Anforderungen eine staub-/gas-/flüssigkeitsdichte Durchführung des Kabels. Kabelverschraubungen mit einem installierten Schirmkontaktmodul erlauben ferner die Kontaktierung einer Kabelabschirmung, mittels der elektromagnetische Interferenzen und elektromagnetische Störungen reduziert oder aufgehoben werden. An der Kabelabschirmung auftretende Störspannungen werden mittels des Schirmkontaktmoduls beispielsweise über einen Montagestutzen auf die Montagewand abgeleitet.

Aus dem Stand der Technik sind verschiedenartige Elemente für Kabelverschraubungen bekannt, die dem dichten Umschliessen und/oder der mechanischen Fixierung eines durchgeführten Kabels dienen. Ebenso sind verschiedenartige Schirmkontaktmodule für Kabelverschraubungen bekannt, die der Kontaktierung der Kabelabschirmung eines durchgeführten Kabels dienen.

Die EP2688169A1 offenbart eine Kabelverschraubung mit einer Montageeinheit, die mit einem Wandelement verbindbar ist, mit einem Schirmkontaktmodul, mit einem mit der Montageeinheit verschraubbaren Fixierungsgehäuse, das einen Lamellenkorb mit kreisförmig angeordnete Lamellen aufweist, mit einer Ringdichtung, die von den Lamellen umschlossen ist, und mit einer Kabelfixiereinheit in der Ausgestaltung einer Hutmutter, die mit dem Fixierungsgehäuse verschraubbar ist. Durch die Hutmutter ist der Lamellenkorb entlang seiner Längsachse beaufschlagbar, so dass die Lamellen gegen die Ringdichtung gedrückt werden, welche gegen das Kabel gepresst wird und dieses abdichtend umschliesst und mechanisch fixiert. Die Montageeinheit ist derart ausgebildet, dass sie eine elektrisch leitende Verbindung zwischen dem Schirmkontaktmodul und dem Wandelement erstellt. Das Schirmkontaktmodul weist ein hohlzylindrisches Halteteil auf, das eine Mittelachse umschliesst und von dem sich federelastische Kontaktelemente radial gegen die Mittelachse erstrecken. Die Kontaktelemente sind beispielsweise als Kontaktfinger oder Kontaktbügel ausgebildet und einstückig an das Halteteil angeformt. Die Kontaktbügel weisen an dem der Mittelachse zugewandten Ende eine Bügelkurve auf, welche verhindert, dass sich die Kontaktbügel an der freigelegten Kabelabschirmung verfangen können, wenn das Kabel axial in die Kabelverschraubung eingeschoben wird. Wenn das Schirmgeflecht hingegen lose ist oder das Kabel gedreht wird, können die Kontaktelemente im Geflecht der Kabelabschirmung einhaken, sodass die Kontaktelemente elastisch gedreht und gegebenenfalls überdehnt werden. Bei diesem Vorgang können Schäden an den Kontaktelementen des Schirmkontaktmoduls und/oder am Geflecht der Kabelabschirmung resultieren. Gegebenenfalls verbleibt eine mangelhafte Kontaktierung zwischen dem Schirmkontaktmodul und der Kabelabschirmung.

Die EP1022836A2 offenbart eine weitere Kabelverschraubung mit einer Montageeinheit in der Ausgestaltung eines Montagestutzens, auf den eine Hutmutter aufsetzbar ist und in dem ein Schirmkontaktmodul, ein Lamellenkorb mit kreisförmig angeordneten Lamellen sowie eine Ringdichtung, die von den Lamellen umschlossen ist, angeordnet sind. Das Schirmkontaktmodul umfasst ein Trägerteil mit federelastischen Kontaktbügeln, die sich gegen die Mittelachse des Schirmkontaktmoduls erstrecken. Die Kontaktbügel weisen eine V-förmige Bügelkurve auf, die zur Kontaktierung der Kabelabschirmung eines eingesetzten Kabels vorgesehen ist. Ferner berühren die Kontaktbügel den Stutzen im Bereich seiner inneren Zylinderfläche, sodass ein Kontakt zwischen der Kabelabschirmung und dem Stutzen erstellt werden kann. Die V-förmige Bügelkurve erlaubt die axialen Verschiebung des Kabels, ohne dass die Kontaktbügel in das Geflecht der Kabelabschirmung einhaken, falls dieses keine Schwächen aufweist. Falls das Schirmgeflecht hingegen lose ist oder das Kabel gedreht wird, können sich die Kontaktelemente jedoch auch bei dieser Kabelverschraubung im Geflecht der Kabelabschirmung verfangen, sodass die Kontaktelemente elastisch gedreht und gegebenenfalls überdehnt werden.

Bei Kabelverschraubungen dieser Art können daher bereits bei einmaligem oder nach mehrfachem Gebrauch, insbesondere bei Drehungen des Kabels oder nicht optimalem Zustand des Geflechts der Kabelabschirmung Schäden an der Kabelverschraubung und/oder am Kabel auftreten.

Sofern anstelle eines Geflechts eine Folie als Kabelabschirmung verwendet wird, können die Kontaktelemente bei einer Verschiebung oder Drehung des Kabels Schürfstellen an der Folie verursachen, die gegebenenfalls aufgerissen wird.

Nachteilig ist ferner, dass bei den bekannten Kabelverschraubungen oft nur ein ungenügender elektrischer Kontakt zwischen den Kontaktelementen und der Kabelabschirmung des installierten Kabels erstellt wird und Übergangswiderstände resultieren. Die Kontaktelemente treten dabei oft nur punktuell in Kontakt mit der Kabelabschirmung.

Der Erfindung liegt daher die Aufgabe zu Grunde, eine verbesserte Kabelverschraubung mit einem Schirmkontaktmodul und ein verbessertes Schirmkontaktmodul zu schaffen.

Insbesondere ist eine Kabelverschraubung zu schaffen, die auch nach mehrmaligem Gebrauch optimal funktioniert und eine einwandfreie Kontaktierung der Kabelabschirmung eines installierten Kabels gewährleistet.

Die Kabelverschraubung soll derart ausgebildet sein, dass Beschädigungen des Schirmkontaktmoduls und der damit verbundenen Kontaktelemente sowie der Kabelabschirmung, eines Schirmgeflechts oder einer Folie, vermieden werden. Beschädigungen des Schirmkontaktmoduls und der damit verbundenen Kontaktelemente sowie der Kabelabschirmung sollen selbst bei unvorteilhafter Einführung und mehrfachen Drehungen des Kabels sowie bei mangelhaftem Zustand der Kabelabschirmung vermieden werden.

Mittels der Kabelverschraubung soll eine gute Kontaktierung der Kabelabschirmung, beispielsweise einer Metallfolie oder eines Metallgeflechts, unabhängig vom Durchmesser des installierten Kabels gewährleistet werden.

Das erfindungsgemässe Schirmkontaktmodul, mittels dessen die oben genannten Aufgaben zu lösen sind, soll in beliebigen Kabelverschraubungen vorteilhaft einsetzbar sein und mit geringem Aufwand an beliebige Kabelverschraubung angepasst werden können.

Diese Aufgabe wird mit einer Kabelverschraubung nach Anspruch 1 und einem Schirmkontaktmodul nach Anspruch 15 gelöst. Vorteilhafte Ausgestaltungen der Erfindung sind in weiteren Ansprüchen angegeben.

Die Kabelverschraubung, die zur Durchführung eines mit einer Kabelabschirmung versehenen Kabels entlang einer Mittelachse durch eine Montageöffnung in einer Montagewand, insbesondere einer Gehäusewand eines elektrischen Geräts oder eines elektrischen Schranks, vorgesehen ist, umfasst
- einen einteiligen oder mehrteiligen Montagestutzen, der einen der Durchführung des Kabels dienenden Stutzenkanal, ein mit einem ersten Aussengewinde versehenes erstes Anschlussteil und ein mit einem zweiten Aussengewinde versehenes zweites Anschlussteil umfasst, und der mit der Montagewand verbindbar ist,
- eine Hutmutter, die einen der Durchführung des Kabels dienenden Hutkanal, eine Andruckkappe und einen Ringflansch mit einem Innengewinde, das zum zweiten Aussengewinde des Montagestutzens korrespondiert, aufweist,
   eine Fixierungsvorrichtung, mittels der das durchgeführte Kabel vorzugsweise dicht abschliessend fixierbar ist, und
   ein Schirmkontaktmodul, das innerhalb des Stutzenkanals angeordnet ist, das ein ringförmiges oder hohlzylindrisches Trägerteil und mehrere mit dem Trägerteil verbundene Kontaktelemente aufweist, die in den Stutzenkanal hineinragen und zur Kontaktierung der Kabelabschirmung des Kabels vorgesehen sind.

Erfindungsgemäss ist vorgesehen, dass die Kontaktelemente als Kontaktzungen ausgebildet sind, die je einen Zungenhals, der mit dem Trägerteil verbunden ist, und einen an den Zungenhals anschliessenden Zungenkopf aufweisen, der eine Zungenwanne mit einem Wannenraum bildet, der gegen die Mittelachse hin verschlossen ist und der durch einen der Mittelachse zugewandten Wannenboden und eine an den Wannenboden anschliessende und in sich geschlossenen Wannenwand begrenzt ist.

Das erfindungsgemässe Schirmkontaktmodul kann in beliebigen Kabelverschraubungen eingesetzt werden, die eine Mittelachse aufweisen, entlang der eine mit einer Kabelabschirmung versehenes Kabel durch die Kabelverschraubung hindurch geführt werden kann. Das hohlzylindrische, ringförmige oder hülsenförmige Trägerteil wird entsprechend an die Abmessungen des Durchgangskanals eines einteiligen oder mehrteiligen Montagestutzens, der gegebenenfalls eine Montageeinheit umfasst, angepasst. Vorzugsweise ist das Trägerteil komprimierbar, sodass es in einem Presssitz kraftschlüssig in den Montagestutzen einsetzbar ist.

Die Kabelverschraubung kann eine beliebige Fixiervorrichtung aufweisen, die gegebenenfalls einen Lamellenkorb und/oder einen elastischen Dichtungsring aufweist, welcher mittels der Hutmutter direkt oder indirekt über die Lamellen des Lamellenkorbs an ein eingesetztes Kabel anpressbar ist, um dieses zu fixieren und den Durchgangskanal dicht abzuschliessen.

Durch die Ausgestaltung der Kontaktelemente als Kontaktzungen mit einem Zungenhals und einem daran anschliessenden Zungenkopf, der eine Zungenwanne mit einem Wannenraum bildet, der gegen die Mittelachse hin verschlossen ist und der durch einen der Mittelachse zugewandten Wannenboden und eine an den Wannenboden anschliessende und in sich geschlossenen Wannenwand begrenzt ist, wird sichergestellt, dass stets nur die der Mittelachse zugewandte Seite des Zungenkopfs in Kontakt mit der Kabelabschirmung gerät.

Der Zungenhals ist elastisch ausgebildet, während der Zungenkopf keine oder nur eine geringe Elastizität aufweist. Der Zungenhals gewährleistet somit, dass der Zungenkopf bei der Einführung eines Kabels vorzugsweise in einer Ebene radial zur Mittelachse in Abhängigkeit des Kabeldurchmessers drehbar ist.

In vorzugsweisen Ausgestaltungen ist vorgesehen, dass der Zungenhals in der Art eines Schwanenhalses zuerst nach oben und anschliessend entlang einer eine Kurve von etwa 180° (+/- 30°) verläuft und in der Folge einen Öffnungswinkel a mit der Wand des Trägerteils einschliesst, der vorzugsweise im Bereich von 40° (+/- 10°) liegt.

Aufgrund der vorteilhaften Ausgestaltung der Kontaktzungen kann ein Kabel kann in die Kabelverschraubung eingeschoben und innerhalb des Vorrichtungskanal mit der Kabelabschirmung beliebig axial vor und zurück verschoben und gedreht werden, ohne dass der Zungenkopf einer der Kontaktzungen in das Geflecht der Kabelabschirmung eingreifen oder eine als Folie ausgebildete Kabelabschirmung beschädigen kann. Selbst wenn der Zungenkopf unter Krafteinwirkung Kabels elastisch gebogen und gedreht wird oder die Kabelabschirmung nicht mehr dicht an der darunterliegenden Kabelisolation anliegt, besteht keine Gefahr, dass ein Zungenkopf der Kontaktzungen in das Geflecht der Kabelabschirmung eingreifen oder eine als Folie ausgebildete Kabelabschirmung beschädigen kann. Aufgrund der vorteilhaften Ausgestaltung des Zungenkopfs können Verbiegungen der Kontaktzungen weitgehend vermieden werden.

Mittels der Zungenköpfe der Kontaktzungen, die eine relativ grosse Kontaktfläche aufweisen, kann hingegen einen einwandfreier Kontakt mit der Kabelabschirmung des installierten Kabels gewährleistet werden, sodass Störspannungen über den Montagestutzen zuverlässig an die Montagewand abgeleitet werden können.

Jeder Zungenkopf umfasst vorzugsweise eine Zungenschale, die den Wannenraum seitlich und den Seiten begrenzt, und eine an die Zungenschale anschliessende Zungenfront, die den Wannenraum frontseitig begrenzt. Die Zungenschale und die Zungenfront bilden die Wannenwand, die in sich geschlossen ist, die in ihrer Höhe gegen den Zungenhals jedoch abnimmt.

Die Zungenschale ist vorzugsweise, kanalförmig ausgebildet. Die an die Zungenschale anschliessende Zungenfront ist vorzugsweise gerundet oder als Kugelsegment, beispielsweise als ein Viertelstück einer Kugel ausgebildet.

Diese Ausgestaltung des Zungenkopfs hat verschiedene Vorteile. Einerseits resultiert ein schonender mechanischer Kontakt zwischen der Kabelabschirmung und dem Zungenkopf. Andererseits resultiert ein besonders guter elektrischer Kontakt zwischen der Kabelabschirmung und dem Zungenkopf.

Bei der Einführung des Kabels mit der freigelegten Kabelabschirmung in die Kabelverschraubung tritt zuerst die gerundete oder sphärische Zungenfront des Zungenkopfs in Kontakt mit der Kabelabschirmung. In der Folge wird die federelastische Kontaktzunge zurückgebogen, sodass die Zungenschale zumindest teilweise mit der Kabelabschirmung in Kontakt treten kann.

Der Wannenboden des Zungenkopfs weist auf der Rückseite vorzugsweise eine Ebene oder eine nur leicht gerundete Kontaktzone auf, die eine flächige Kontaktierung der Kabelabschirmung gewährleistet. Dieser Wannenrücken kann hingegen auch eine an den Umfang des Kabels angepasste Einbuchtung aufweisen, mittels der die Kontaktierung verbessert wird.

In weiteren bevorzugten Ausgestaltungen ist der der Mittelachse zugewandte Wannenrücken vorzugsweise mit Einformungen oder Ausformungen versehen, durch die mehrere Kontaktverbindungen zwischen der Kabelabschirmung und dem Zungenkopf realisiert werden können. Die Ausformungen, beispielsweise Nocken oder Kämme können in das Geflecht der Kabelabschirmung eindringen und besonders gute Kontakte erstellen. Demgegenüber kann das Geflecht der Kabelabschirmung in die Einformungen im Zungenkopfs verdrängt werden, wodurch wiederum eine gute Kontaktierung erzielt wird. Dabei genügt es, wenn diese Einformungen oder Ausformungen nur eine geringe Höhe aufweisen, sodass nur eine minimale mechanische Wechselwirkung resultiert, wenn das Kabel eingeführt oder gedreht wird.

Die Ausformungen und Einformungen, die vorzugsweise wellenförmig ausgebildet sind, sind vorzugsweise in einem konkaven Bereich des Zungenkopfs oder Wannenbodens angeordnet, der zur Aufnahme eines Teils der Kabelabschirmung vorgesehen ist.

Die Länge des Zungenkopfs setzt sich aus der Länge der Zungenschale und der Länge der Zungenfront zusammen, wobei die Länge der Zungenschale etwa um einen Faktor im Bereich von 1.5 - 5.0 grösser ist als die Länge der Zungenfront. Die Länge der Zungenfront ist derart gewählt, dass die Zungenfront ihre Funktion bei der Kontaktierung der Kabelabschirmung bestimmungsgemäss erfüllen kann und eine störende Wechselwirkung zwischen der Kabelabschirmung und der Zungenfront vermieden wird. Nach der mechanischen Kontaktierung der Zungenfront beim Einschieben des Kabels wird der Zungenkopf um einen Winkel gedreht, der in einem Bereich von beispielsweise 0° - 40° liegt. Je grösser der Durchmesser des Kabels ist, desto grösser ist der Drehwinkel des Zungenkopfs. In der Folge kann die Zungenschale über eine grössere Länge in Kontakt mit der Kabelabschirmung treten, wodurch eine optimale Kontaktierung der Kabelabschirmung resultiert.

Das Trägerteil des Schirmkontaktmoduls ist vorzugsweise hohlzylindrisch ausgebildet und umfasst eine Trägerwand, die an der Kanalwand des Stutzenkanals elektrisch kontaktierend anliegt. Die Kontaktzungen schliessen mit der Trägerwand einen Öffnungswinkel ein, der in einem Bereich von 30°-50°, bevorzugt etwa bei 40° liegt. Der Öffnungswinkel ist derart gewählt, dass die Ränder der Zungenfront nicht in Kontakt mit der Kabelabschirmung eines eingeführten Kabels treten können und der Zungenkopf beim Einschieben eines Kabels stets gegen die Trägerwand gedreht und nicht gegen Mittelachse gezogen wird.

Der Zungenkopf weist im Bereich anschliessend an den Zungenträger einen ersten Krümmungsradius und im Bereich der Zungenfront einen zweiten Krümmungsradius auf. Vorzugsweise ist der erste Krümmungsradius um einen Faktor in einem Bereich von 1.5 - 3.5 höher als der zweite Krümmungsradius. Angrenzend an den Zungenträger weist der Zungenkopf daher eine relativ geringe Steigung auf. Die Zungenfront ist demgegenüber stark gekrümmt.

Das Trägerteil und die vorzugsweise einstückig mit dem Trägerteil verbundenen Kontaktzungen sind vorzugsweise aus einem Blechteil ausgeschnitten und ausgeformt. Auf diese Weise kann das Schirmkontaktmodul besonders kostengünstig hergestellt werden.

In alternativen Ausgestaltungen sind das Trägerteil und die Kontaktzungen formschlüssig und/oder kraftschlüssig, oder durch eine Schweissverbindung oder eine Klebstoffverbindung miteinander verbunden. Als Trägerteil kann auch ein Teil des Montagestutzens dienen, in das Kontaktzungen formschlüssig und/oder kraftschlüssig eingesetzt werden. Das Trägerteil kann daher auch in den Montagestutzen integriert sein.

Die Materialdicke der Kontaktzungen ist über den Bereich des Zungenhalses und des Zungenkopfs vorzugsweise zumindest annähernd konstant. Eine Versteifung des Zungenkopfs erfolgt durch die Ausformung.

Die Kontaktzungen sind vorzugsweise in eine Richtung geneigt, die von der Hutmutter abgewandt ist. In weiteren vorzugsweisen Ausgestaltung kann auch vorgesehen werden, dass das Trägerteil an beiden Enden mit Kontaktzungen versehen ist, die gegeneinander gerichtet und gegen die Mittelachse geneigt sind.

Nachfolgend wird die Erfindung anhand von Zeichnungen näher erläutert. Dabei zeigt:

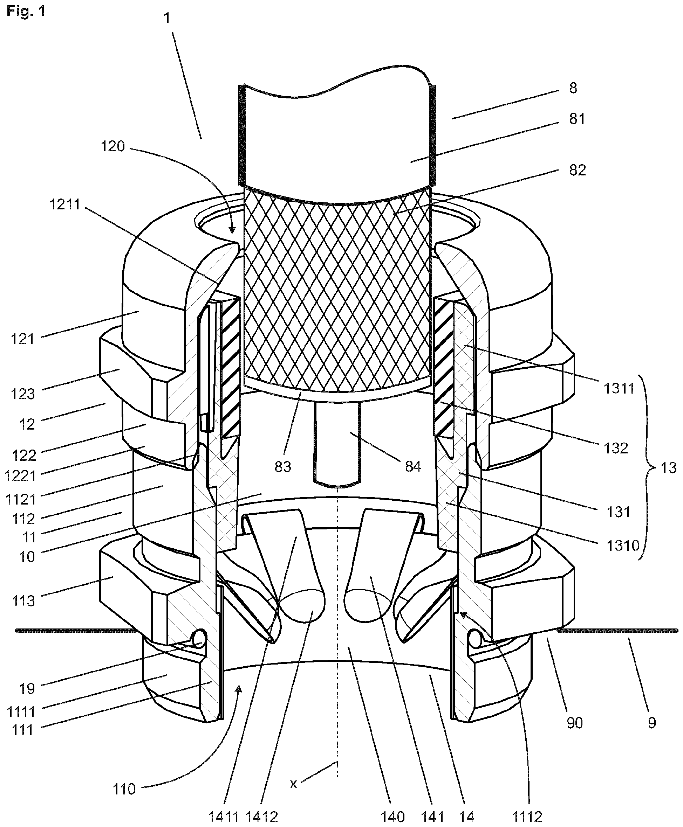

- Fig. 1: eine mit einer Montagewand 9 verbundene erfindungsgemässe Kabelverschraubung 1 mit einem Montagestutzen 11, mit einer mit dem Montagestutzen 11 verschraubten Hutmutter 12, mit einer Fixierungsvorrichtung 13 und mit einem Schirmkontaktmodul 14, das innerhalb des Montagestutzens 12 angeordnet ist und radial gegeneinander gerichtete Kontaktzungen 141 aufweist, die mit einem hohlzylindrischen Trägerteil 140 verbunden sind und die zur Kontaktierung der freigelegten Kabelabschirmung 14 eines Kabels 8 vorgesehen sind, das entlang einer Mittelachse x durch die Kabelverschraubung 1 und die Montagewand 9 hindurchgeführt wird;
- Fig. 2: die Kabelverschraubung 1 von Fig. 1 in Explosionsdarstellung;
- Fig. 3a: eine der Kontaktzungen 141 des Schirmkontaktmoduls 14 von Fig. 1;
- Fig. 3b: die Kontaktzunge 141 von Fig. 3a von der Seite;
- Fig. 3c: die Kontaktzunge 141 von Fig. 3b in Schnittdarstellung;
- Fig. 4a: die Oberseite des Schirmkontaktmoduls 14 von Fig. 1 mit acht Kontaktzungen 141, die einen Zungenhals 1411 und daran anschliessend einen gewölbten Zungenkopf 1412 aufweisen;
- Fig. 4b: die Unterseite des Schirmkontaktmoduls 14 von Fig. 3a;
- Fig. 5: das Schirmkontaktmodul 14 von Fig. 4a mit einer exemplarischen Abwicklung 14120 des Zungenkopfs 1412 der Kontaktzungen 141;
- Fig. 6: eine vorzugsweise ausgestaltete Abwicklung 140 eines erfindungsgemässen Schirmkontaktmoduls 14, welches ein Trägerteil 140 mit zwei miteinander verbindbaren Endstücken 1401, 1402 aufweist;
- Fig. 7a: einen Teil des aus der Abwicklung 140 von Fig. 6 gefertigten Schirmkontaktmoduls 14 mit den voneinander getrennten Endstücken 1401, 1402; und
- Fig. 7b: den Teil des Schirmkontaktmoduls 14 von Fig. 7a mit den miteinander verbundenen Endstücken 1401, 1402.

Fig. 1 zeigt eine mit einer Montagewand 9 verbundene erfindungsgemässe Kabelverschraubung 1 in einem Viertelschnitt, der den Blick auf ein erfindungsgemässes Schirmkontaktmodul 14 freigelegt. Die Kabelverschraubung 1 weist eine Mittelachse x auf und umschliesst einen Vorrichtungskanal 10, in den hinein ein exemplarisch gezeigtes Kabel 8 eingeführt wird, das einen Kabelmantel 81, eine frontseitig freigelegte Kabelabschirmung 82, eine Leiterisolation 83 und einen einzelnen Kabelleiter 84 aufweist. Das Kabel 8 wird so weit eingeführt, bis der Kontakt zwischen der Kabelabschirmung 82 und dem Schirmkontaktmodul 14 erstellt ist. Anschliessend wird das Kabel 8 fixiert, wie dies anschliessend beschrieben ist.

In dieser Ausgestaltung umfasst die Kabelverschraubung 1
- einen einteiligen Montagestutzen 11, der einen der Durchführung des Kabels 8 dienenden Stutzenkanal 110, ein mit einem ersten Aussengewinde 1111 versehenes erstes Anschlussteil 111 und ein mit einem zweiten Aussengewinde 1112 versehenes zweites Anschlussteil 112 aufweist, und der mit der Montagewand 9 verbunden oder verbindbar ist,
- eine Hutmutter 12, die einen der Durchführung des Kabels 8 dienenden Hutkanal 120, eine Andruckkappe 121 und einen Ringflansch 122 mit einem Innengewinde 1221 aufweist, das mit dem zweiten Aussengewinde 1112 des Montagestutzens 11 verschraubt ist,
eine Fixierungsvorrichtung 13, mittels der das Kabel 8 vorzugsweise dicht abschliessend fixierbar ist.

Zur Installation des Montagestutzens 11 wird das erste Anschlussteil 111 so weit durch eine Montageöffnung 90 in der Montagewand 9 hindurchgeführt, bis ein am Montagestutzen 11 vorgesehener Werkzeugangriffsring 113 an der Montagewand 9 anliegt und eine Schraubenmutter (nicht gezeigt) mit dem Anschlussteil 111 verschraubt werden kann, um den Montagestutzen 11 an der Montagewand 9 zu fixieren. An der Unterseite des Werkzeugangriffsrings 113 ist ein Dichtungsring 19 vorgesehen, mittels dessen die Montageöffnung 90 nach der Installation des Montagestutzens 11 dicht abgeschlossen wird.

Die aus dem Stand der Technik bekannte Fixierungsvorrichtung 13 umfasst in dieser Ausgestaltung einen Lamellenkorb 131 und einen elastischen Dichtungsring 132. Der Lamellenkorb 131 umfasst einen hohlzylindrischen Lamellenträger 1310, der den Dichtungsring 132 trägt, und eine Vielzahl von biegeelastischen Lamellen 1311, die in gleichen Abständen um die Mittelachse x herum angeordnet sind, gegebenenfalls einander überlappen, und, in Abwesenheit von Krafteinwirkungen, senkrecht ausgerichtet den Dichtungsring 132 umschliessen.

An der Innenseite weist die Hutmutter 12 eine Andruckfläche 1211 auf, die konisch zur Mittelachse x verläuft und mittels der die Enden der Lamellen 1311 beim Festziehen der Hutmutter 12 derart beaufschlagbar sind, dass die Lamellen 1311 in radialer Richtung zur Mittelachse x verdrängt und gebogen werden. Der von den Lamellen 1311 umschlossene Dichtungsring 132 wird bei diesem Vorgang gegen das installierte Kabel 8 gepresst, sodass dieses mechanisch fixiert und dicht abschliessend umschlossen wird. Zur Betätigung der Hutmutter 12 weist diese einen Werkzeugangriffsring 123 auf.

Das Schirmkontaktmodul 14, das innerhalb des Stutzenkanals 110 angeordnet ist, umfasst ein hohlzylindrisches Trägerteil 140 und mehrere mit dem Trägerteil 140 verbundene Kontaktelemente 141, die vorzugsweise in einer Ebene radial zur Mittelachse x in den Stutzenkanal 110 hineinragen und zur Kontaktierung der Kabelabschirmung 82 des Kabels 8 vorgesehen sind.

Das hohlzylindrische oder hülsenförmige Trägerteil 140, das alternativ auch als Ring ausgebildet sein kann, sitzt vorzugsweise in einem Presssitz dicht anliegend an der Innenwand des ersten Anschlussteils 111, wodurch ein optimaler elektrischer Kontakt zwischen den Kontaktelementen 141 und dem metallenen Montagestutzen 11 und somit auch mit der Montagewand 9 erstellt werden kann. Die Kabelabschirmung 82 des eingeführten Kabels 8 ist daher über das Schirmkontaktmodul 14 elektrisch mit der Montagewand 9 verbindbar, sodass Störspannungen auf der Kabelabschirmung 82 abgeleitet werden können.

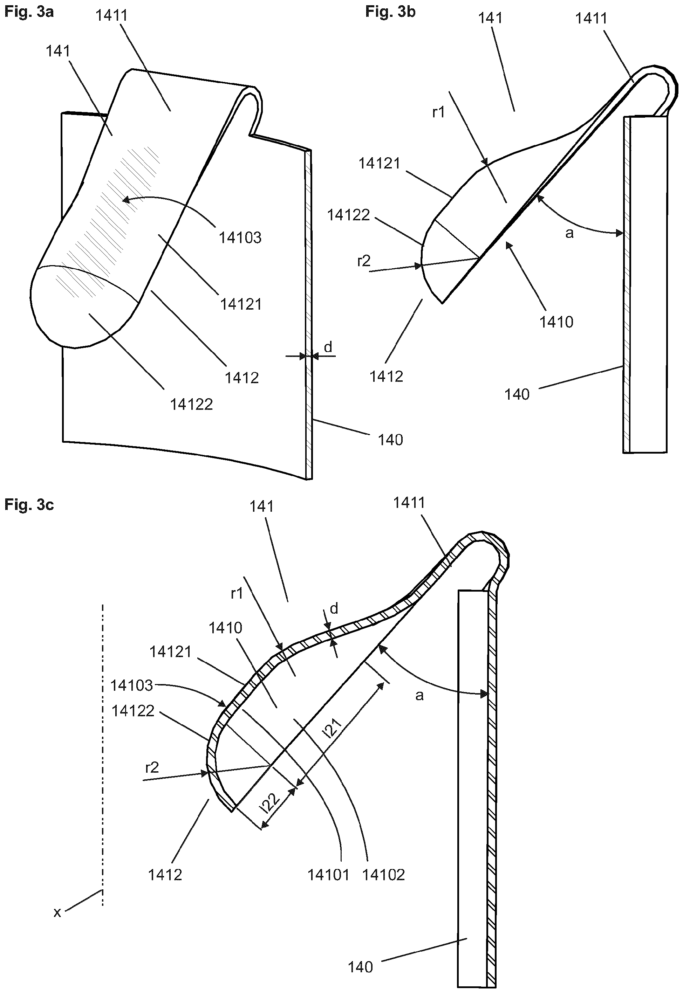

Erfindungsgemäss sind die Kontaktelemente 141 als Kontaktzungen 141 ausgebildet, die je einen Zungenhals 1411, der einstückig, optional auch formschlüssig oder kraftschlüssig, mit dem Trägerteil 140 verbunden ist, und einen an den Zungenhals 1411 anschliessenden Zungenkopf 1412 aufweisen. Die Ausgestaltung des Zungenkopfs 1412 wird nachstehend mit Bezug zu Fig. 3a, Fig. 3b und Fig. 3c näher beschrieben.

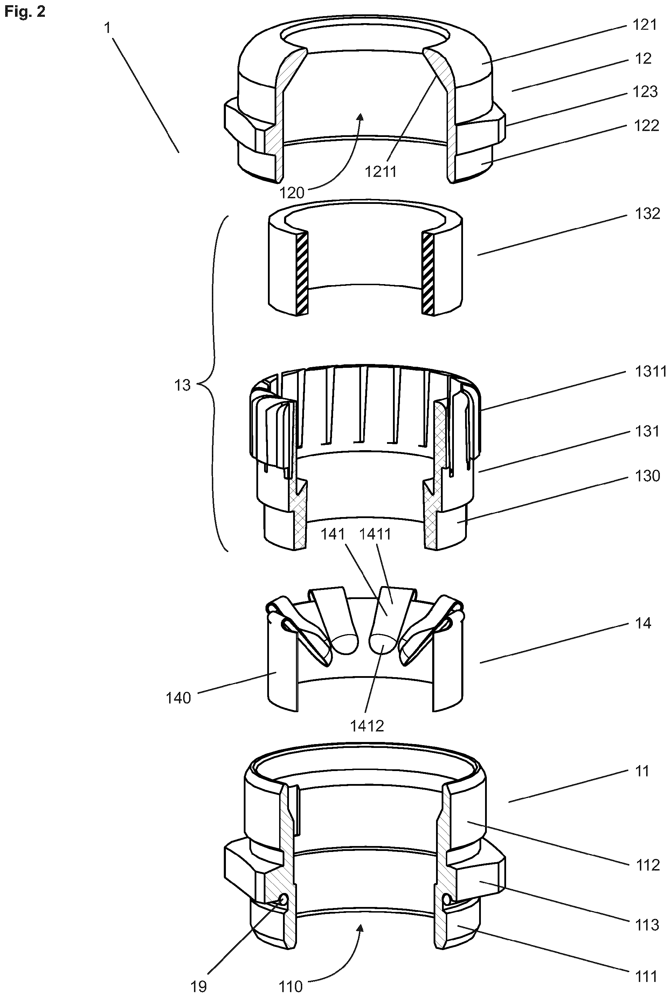

Fig. 2 zeigt die Kabelverschraubung 1 von Fig. 1 mit dem Montagestutzen 11, dem Schirmkontaktmodul 14, dem Lamellenkorb 131, dem Dichtungsring 132 und der Hutmutter 12 in Explosionsdarstellung.

Fig. 3a zeigt eine der Kontaktzungen 141 des Schirmkontaktmoduls von Fig. 1. Das hohlzylindrische oder hülsenförmige Trägerteil 140 ist nur fragmentarisch gezeigt. An der Oberseite des Trägerteils 140 ist der Zungenhals 1411 einstückig angeformt. Das Trägerteil 140 und die Kontaktzungen 141 sind vorzugsweise aus einem dünnen Metallstück mit einer Materialdicke d geformt, die beispielsweise in einem Bereich von 0.2 mm - 0.8 mm liegt.

Der Zungenhals 1411 ist elastisch ausgebildet, während der Zungenkopf 1412 aufgrund seiner Ausformung keine oder nur eine geringe Elastizität aufweist. Der Zungenhals 1411 verläuft zuerst nach oben und durchläuft eine Kurve von zumindest annähernd 180° und schliesst in der Folge einen Öffnungswinkel a mit der Wand des Trägerteils 140 ein, der vorzugsweise in einem Bereich von 30°- 50°, bevorzugt etwa bei 40° liegt.

Fig. 3c zeigt, dass der Zungenkopf 1412 eine Zungenwanne mit einem Wannenraum 1410 bildet, der gegen die Mittelachse x hin verschlossen ist. Der Zungenkopf 1412 umfasst eine kanalförmige Zungenschale 14121 und eine an die Zungenschale 14121 anschliessende Zungenfront 14122, die den Wannenraum 1410 frontseitig begrenzt. Die Zungenschale 14121 und die Zungenfront 14122 bilden zusammen die umlaufende Wannenwand 14102 und den Wannenboden 14101 des wannenförmigen Zungenkopfs 1412.

Fig. 3a zeigt, dass der Zungenkopf 1412 einen flachen oder leicht gerundeten Wannenrücken 14103 aufweist, der eine relativ grosse Kontaktfläche bildet, die bei entsprechendem Durchmesser des Kabels 8 vollständig an der Kabelabschirmung 82 anliegt und eine gute elektrische Kontaktierung gewährleistet.

Der Öffnungswinkel a ist derart gewählt, dass die Ränder der Zungenfront 14122 nicht in Kontakt mit der Kabelabschirmung 82 des eingeführten Kabels 8 treten können und der Zungenkopf 1412 stets gegen die Wand des Trägerteils 140 gedreht und nicht gegen die Mittelachse x gezogen wird.

Fig. 3b zeigt die Kontaktzunge von 141 Fig. 3a von der Seite. Es ist gezeigt, dass der Zungenkopf 1412 im Bereich anschliessend an den Zungenträger 1411 einen ersten Krümmungsradius r1 und im Bereich der sphärischen Zungenfront 14122 einen zweiten Krümmungsradius r2 aufweist. Vorzugsweise ist der erste Krümmungsradius r1 um einen Faktor in einem Bereich von 1.5 - 3.5 höher als der zweite Krümmungsradius r2, der vorzugsweise in einem Bereich von 2.0 mm - 3.0 mm liegt. Angrenzend an den Zungenträger 1411 weist der Zungenkopf 1412 daher eine relativ geringe Steigung auf. Die Zungenfront 14122 ist demgegenüber stark gekrümmt und dient beim Einführen des Kabels 8 der sicheren mechanischen Kontaktierung der Kabelabschirmung 82 und der anschliessenden Drehung der Kontaktzunge 141. In Richtung zur Mittelachse x bildet die Zungenfront 1412 ein Kugelsegment, welches auch über ein teilweise gelöstes und nicht mehr dicht an der Kabelisolation 83 anliegendes Geflecht der Kabelabschirmung 82 hinweg gleiten kann, ohne einzuhaken oder die gegebenenfalls als Folie ausgebildete Kabelabschirmung 82 zu verletzen.

Fig. 3c zeigt ferner, dass die Länge des Zungenkopfs 1412 sich aus der Länge 121 der Zungenschale 14121 und der Länge 122 der Zungenfront 1142 zusammensetzt, wobei die Länge 121 der Zungenschale 14121 etwa um einen Faktor von etwa 2.75 grösser ist als die Länge 122 der Zungenfront 1142. Die Zungenschale 14121 kann daher über einen relativ langen Bereich eine Kontaktierung erstellen.

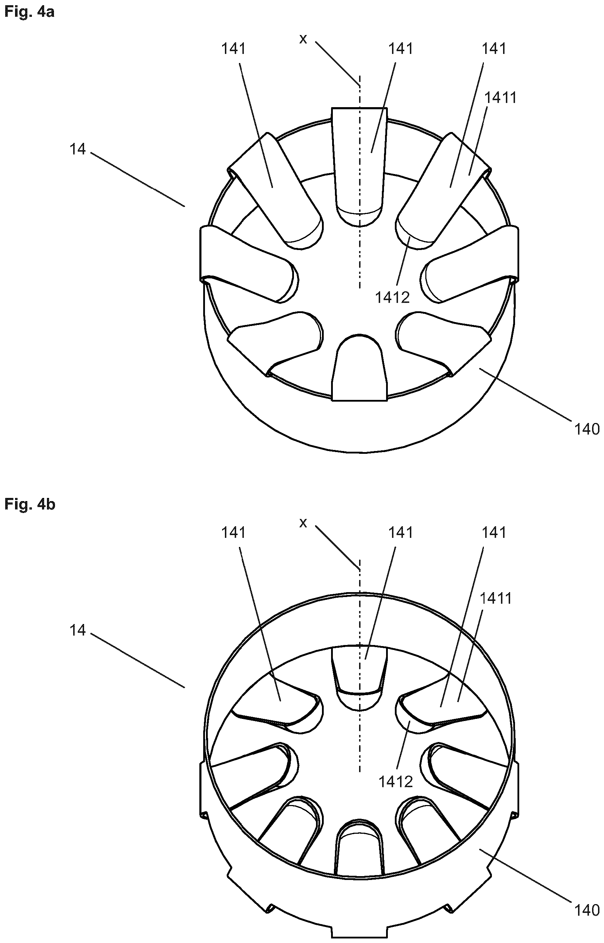

Fig. 4a zeigt die Oberseite des Schirmkontaktmoduls 14 von Fig. 1 mit acht radial gegen die Mittelachse x gerichteten Kontaktzungen 141, die einen Zungenhals 1411 und daran anschliessend einen gewölbten Zungenkopf 1412 aufweisen. Fig. 4b zeigt die Unterseite des Schirmkontaktmoduls 14 von Fig. 3a. Es ist ersichtlich, dass der Zungenkopf 1412 der Kontaktzungen 141 sowohl aus der Sicht von Fig. 4a, also von oben, als auch aus der Sicht von Fig. 4b, also von unten, mit einer gerundeten Fläche gegen das eingeführte Kabel 8 gerichtet ist, sodass die Kontaktzungen 141 bei der Einführung des Kabels 8 stets radial nach aussen gegen das Trägerteil 140 verdrängt werden.

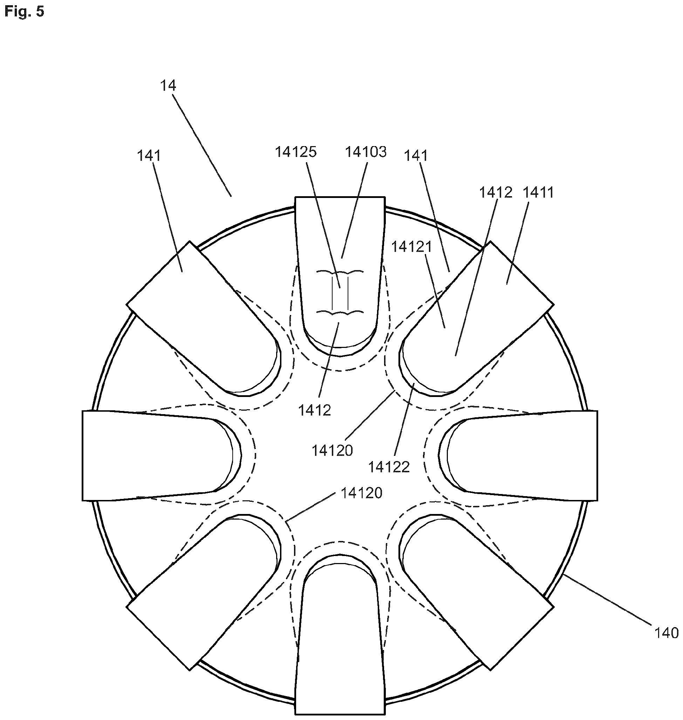

Fig. 5 zeigt das Schirmkontaktmodul 14 von Fig. 3a mit der Abwicklung 14120 des Zungenkopfs 1412 der Kontaktzungen 141, die bei der Fertigung wannenförmig ausgebogen wird. An einem Zungenkopf 1412 ist exemplarisch gezeigt, dass der Zungenkopf 1412 optional Einformungen oder Ausformungen 14120 aufweisen kann, die eine Mehrfachkontaktierung der Kabelabschirmung 82 gewährleisten.

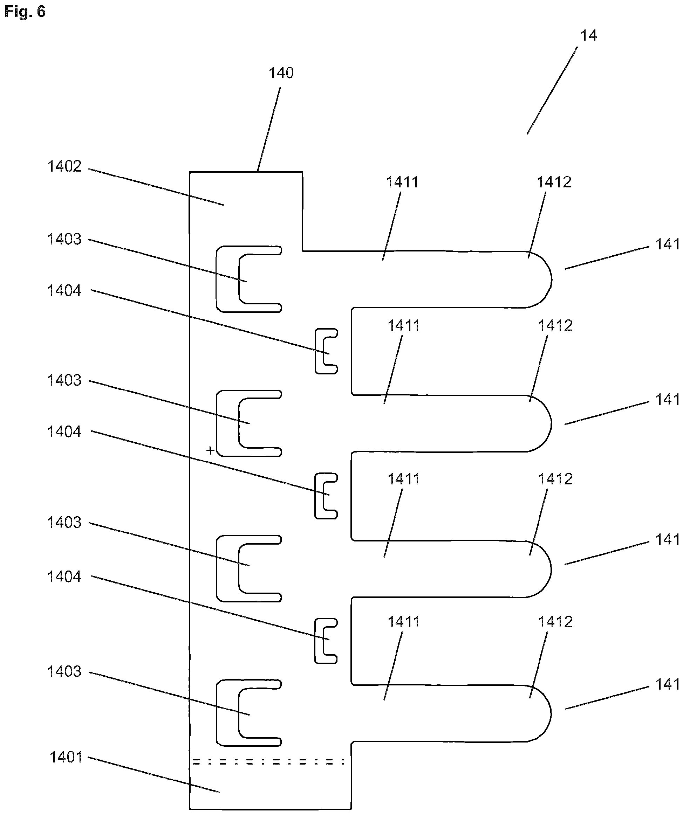

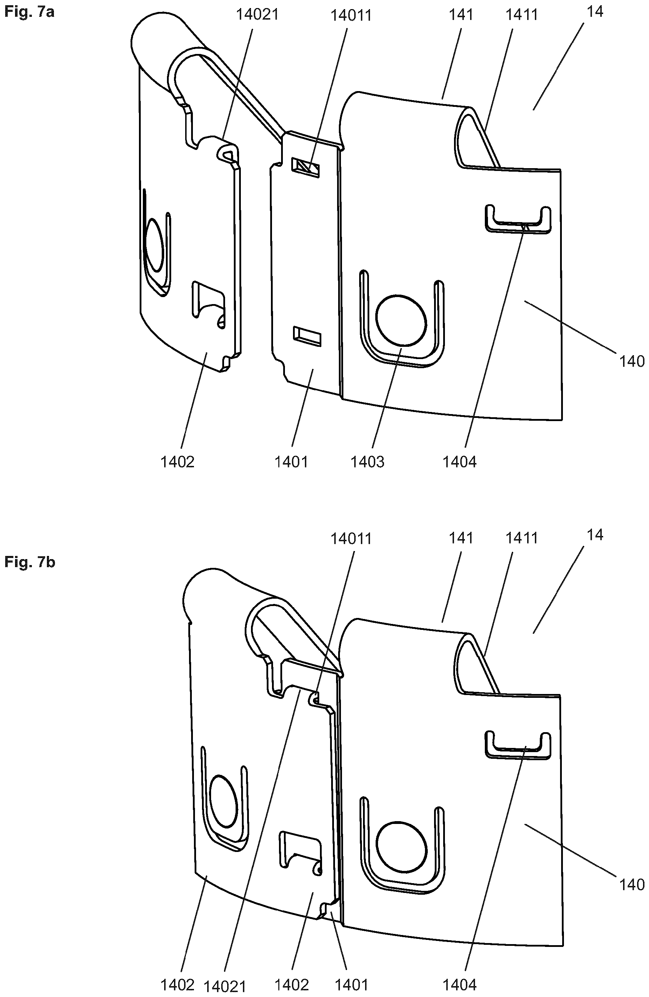

Fig. 6 zeigt eine vorzugsweise ausgestaltete Abwicklung eines erfindungsgemässen Schirmkontaktmoduls 14, die beispielsweise aus einem vorzugsweise federelastischen Blechstück ausgeschnitten wurde. Der Zungenkopf 1412 der Kontaktzungen 141 ist noch nicht ausgeformt und der Zungenhals 1411 ist in diesem Fall nicht verjüngt. Das Trägerteil 140 ist streifenförmig ausgebildet und weist zwei Endstücke 1401, 1402 auf, die einander nach der Ausformung des Schirmkontaktmoduls 14 derart überlappen, dass sich der Aussendurchmesser des Schirmkontaktmoduls 14 an der Verbindungsstelle nicht erhöht. Das erste Endstück 1401 wird daher durch Biegungen entlang zwei strichpunktiert gezeigten Biegelinien nach innen versetzt. Die Verbindung der Endstücke 1401, 1402 erfolgt beispielsweise durch Verschlussöffnungen 14011 und Verschlusslaschen 14021, wie dies in Fig. 7b gezeigt ist.

Aus dem Streifen, der das Trägerteil 140 bildet, sind zudem Kontaktfedern 1403 und Rastfedern 1404 ausgeschnitten, die bei der Ausformung des Schirmkontaktmoduls 14 nach aussen gebogen werden. Die Kontaktfedern 1403 liegen nach der Installation des Schirmkontaktmoduls 14 im Montagestutzen 11 elektrisch kontaktiert an der Wand des Stutzenkanals 110 an. Die Rastfedern 1404 können innerhalb des Stutzenkanals 110 an einer umlaufenden Schulter 1112 einrasten (siehe Fig. 1), von der das Schirmkontaktmodul gehalten wird, wenn das Kabel 8 in die Kabelverschraubung eingeführt wird und in Kontakt mit dem Kontaktzungen 141 gelangt.

Fig. 7a zeigt einen Teil des aus der Abwicklung 140 von Fig. 6 gefertigten Schirmkontaktmoduls 14 mit den voneinander getrennten Endstücken 1401, 1402. Das erste Endstück 1401 ist durch Biegung radial nach innen versetzt und weist zwei Verschlussöffnungen 14011 auf. Das zweite Endstück 1402 weist zwei Verschlusslaschen 14021 auf, die zu den Verschlussöffnungen 14011 korrespondieren.

Fig. 7b den Teil des Schirmkontaktmoduls 14 von Fig. 7a mit den miteinander verbundenen Endstücken 1401, 1402. Die Verschlusslaschen 14021 sind in die Verschlussöffnungen 14011 eingehängt und gegebenenfalls umgebogen.

### Bezugszeichenliste

- 1: Kabelverschraubung
- 10: Vorrichtungskanal
- 11: Montagestutzen
- 110: Stutzenkanal
- 111: erstes Anschlussteil
- 1111: erstes Aussengewinde
- 112: zweites Anschlussteil
- 1121: zweites Aussengewinde
- 113: Werkzeugangriffsring
- 12: Hutmutter
- 120: Hutkanal
- 121: Andruckkappe
- 1211: Andruckfläche
- 122: Ringflansch
- 1221: Innengewinde
- 123: Werkzeugangriffsring
- 13: Fixierungsvorrichtung
- 131: Lamellenkorb
- 1310: Lamellenträger
- 1311: Lamellen
- 132: Dichtungsring
- 14: Schirmkontaktmodul
- 140: Trägerteil
- 1401: erstes Endstück
- 14011: Verschlussöffnung
- 1402: zweites Endstück
- 14021: Verschlusslasche
- 1403: Kontaktfeder
- 1404: Rastfeder
- 141: Kontaktzungen
- 1410: Wannenraum
- 14101: Wannenboden
- 14102: Wannenwand
- 14103: Wannenrücken
- 1411: Zungenhals
- 1412: Zungenkopf
- 14120: Abwicklung des Zungenkopfs 1412
- 14121: Zungenschale
- 14122: Zungenfront
- 14125: Ausformungen, Wellenform
- 19: Dichtungsring
- 8: Kabel
- 81: Kabelmantel
- 82: Kabelabschirmung
- 83: Leiterisolation
- 84: Kabelleiter
- 9: Montagewand
- 90: Montageöffnung
- a: Neigungswinkel der Kontaktzungen 141
- 121: Länge des Zungenschale 14121
- 122: Länge der Zungenfront 14122
- r1: Krümmungsradius im Eingangsbereich des Zungenkopfs 142
- r2: Krümmungsradius im Bereich der Zungenfront 14122
- x: Mittelachse

## Patentansprüche

**1.** Kabelverschraubung (1) mit einer Mittelachse (x) zur Durchführung eines mit einer Kabelabschirmung (82) versehenen Kabels (8) durch eine Montageöffnung (90) in einer Montagewand (9), insbesondere einer Gehäusewand eines elektrischen Geräts oder eines elektrischen Schranks,
mit einem einteiligen oder mehrteiligen Montagestutzen (11), der einen der Durchführung des Kabels (8) dienenden Stutzenkanal (110), ein mit einem ersten Aussengewinde (1111) versehenes erstes Anschlussteil (111) und ein mit einem zweiten Aussengewinde (1112) versehenes zweites Anschlussteil (1121) aufweist, und der mit der Montagewand (9) verbindbar ist,
mit einer Hutmutter (12), die einen der Durchführung des Kabels (8) dienenden Hutkanal (120), eine Andruckkappe (121) und einen Ringflansch (122) mit einem Innengewinde (112), das zum zweiten Aussengewinde (1112) des Montagestutzens (11) korrespondiert, aufweist,
mit einer Fixierungsvorrichtung (13), mittels der das durchgeführte Kabel (8) vorzugsweise dicht abschliessend fixierbar ist, und
mit einem Schirmkontaktmodul (14), das innerhalb des Stutzenkanals (110) angeordnet ist, das ein ringförmiges oder hohlzylindrisches Trägerteil (140) und mehrere mit dem Trägerteil (140) verbundene Kontaktelemente (141) aufweist, die in den Stutzenkanal (110) hineinragen und zur Kontaktierung der Kabelabschirmung (82) des Kabels (8) vorgesehen sind,
**dadurch gekennzeichnet,**
**dass** die Kontaktelemente (141) als Kontaktzungen (141) ausgebildet sind, die je einen Zungenhals (1411), der mit dem Trägerteil (140) verbunden ist, und einen an den Zungenhals (1411) anschliessenden Zungenkopf (1412) aufweisen, der eine Zungenwanne mit einem Wannenraum (1410) bildet, der gegen die Mittelachse (x) hin verschlossen ist und der durch einen der Mittelachse (x) zugewandten Wannenboden (14101) und eine an den Wannenboden (14101) anschliessende und in sich geschlossenen Wannenwand (14102) begrenzt ist.

**2.** Kabelverschraubung (1) nach Anspruch 1, **dadurch gekennzeichnet, dass** der Zungenhals (1411) in der Art eines Schwanenhalses ausgebildet ist und entlang einer Kurve von etwa 180° bis zum Zungenkopf (1412) verläuft.

**3.** Kabelverschraubung (1) nach Anspruch 1 oder 2, **dadurch gekennzeichnet, dass** der Zungenkopf (1412) eine kanalförmige Zungenschale (14121) und eine an die Zungenschale (14121) anschliessende Zungenfront (14122) umfasst, welche den Wannenraum (1410) frontseitig begrenzt und gerundet oder als Kugelsegment ausgebildet ist.

**4.** Kabelverschraubung (1) nach einem der Ansprüche 1 - 3, **dadurch gekennzeichnet, dass** der wannenförmige Zungenkopf (1412) einen flachen oder nur leicht gerundeten Wannenrücken (14103) aufweist, der eine Kontaktfläche bildet.

**5.** Kabelverschraubung (1) nach einem der Ansprüche 1 - 4, **dadurch gekennzeichnet, dass** der Wannenboden (14101) Einformungen oder Ausformungen (14125) aufweist, die vorzugsweise wellenförmig ausgebildet sind und/oder die vorzugsweise innerhalb eines konkaven Bereichs des Wannenbodens (14101) vorgesehen sind.

**6.** Kabelverschraubung (1) nach einem der Ansprüche 1 - 5, **dadurch gekennzeichnet, dass** die Länge des Zungenkopfs (1412) sich aus der Länge (121) der Zungenschale (14121) und der Länge (122) der Zungenfront (1142) zusammensetzt, wobei die Länge (121) der Zungenschale (14121) etwa um einen Faktor im Bereich von 1.5 - 5.0 grösser ist als die Länge (122) der Zungenfront (1142).

**7.** Kabelverschraubung (1) nach einem der Ansprüche 1 - 6, **dadurch gekennzeichnet, dass** das Trägerteil (140) hohlzylindrisch ausgebildet ist und eine Trägerwand aufweist, die an der Kanalwand des Stutzenkanals (110) elektrisch kontaktierend anliegt und dass die Kontaktzungen (141) mit der Trägerwand einen Öffnungswinkel (a) einschliessen, der in einem Bereich von 30°- 50°, bevorzugt etwa bei 40° liegt.

**8.** Kabelverschraubung (1) nach einem der Ansprüche 1 - 7, **dadurch gekennzeichnet, dass** ein erster Krümmungsradius (r1) in dem an den Zungenträger (1411) anschliessenden Bereich des Zungenkopfs (1412) um einen Faktor in einem Bereich von 1.5 - 3.5 höher ist als ein zweiter Krümmungsradius (r2) im Bereich der Zungenfront (14122).

**9.** Kabelverschraubung (1) nach einem der Ansprüche 1 - 8, **dadurch gekennzeichnet,**
**dass** das Trägerteil (140) und die einstückig mit dem Trägerteil (140) verbundenen Kontaktzungen (141) aus einem Blechteil ausgeschnitten und ausgeformt sind; oder
**dass** das Trägerteil (140) und die Kontaktzungen (141) formschlüssig, kraftschlüssig, durch eine Schweissverbindung oder eine Klebstoffverbindung miteinander verbunden sind.

**10.** Kabelverschraubung (1) nach einem der Ansprüche 1 - 9, **dadurch gekennzeichnet, dass** Trägerteil (140) hülsenförmig ausgebildet und in einem Presssitz kraftschlüssig und/oder formschlüssig im Stutzenkanal (110) gehalten ist.

**10.** Kabelverschraubung (1) nach einem der Ansprüche 1 - 9, **dadurch gekennzeichnet,**
a) **dass** das Trägerteil (140) einander überlappende Endstücke (1401, 1402) aufweist, die durch Verschlusselemente (14011, 14012), die formschlüssig ineinander eingreifen, miteinander verbunden sind; und/oder
b) **dass** aus dem Trägerteil (140) Kontaktfedern (1403) ausgebogen und bezüglich der Mittelachse (x) radial nach aussen gebogen sind, die die Wand des Stutzenkanals (110) elektrisch kontaktieren; und/oder
c) **dass** aus dem Trägerteil (140) Rastfedern (1404) ausgebogen und bezüglich der Mittelachse (x) radial nach aussen gebogen sind, die an einer umlaufenden Schulter (1112) an der Wand des Stutzenkanals (110) einrastet sind.

**12.** Kabelverschraubung (1) nach einem der Ansprüche 1 - 12, **dadurch gekennzeichnet, dass** die Kontaktzungen (141) in eine Richtung geneigt sind, die von der Hutmutter (12) abgewandt ist.

**13.** Kabelverschraubung (1) nach einem der Ansprüche 1 - 13, **dadurch gekennzeichnet, dass** das Trägerteil beidseitig mit Kontaktzungen (141) versehen ist, die gegeneinander gerichtet und gegen die Mittelachse (x) geneigt sind.

**14.** Kabelverschraubung (1) nach einem der Ansprüche 1 - 13, **dadurch gekennzeichnet, dass** die Fixierungsvorrichtung (13) einen Lamellenkorb (131) mit Lamellen (1311), die gegen die Hutmutter (12) gerichtet sind, und einen Dichtungsring (132), der von den Lamellen (1311) umschlossen ist, umfasst.

**15.** Schirmkontaktmodul (1) für eine Kabelverschraubung insbesondere nach einem der Ansprüche 1 - 14, mit einer Mittelachse (x) zur Durchführung eines mit einer Kabelabschirmung (82) versehenen Kabels (8) mit einem ringförmigen oder hohlzylindrischen Trägerteil (140) und mehreren mit dem Trägerteil (140) verbundenen Kontaktelementen (141), die der Mittelachse (x) zugewandt sind und die zur Kontaktierung der Kabelabschirmung (82) des Kabels (8) vorgesehen sind, **dadurch gekennzeichnet, dass** die Kontaktelemente (141) als Kontaktzungen (141) ausgebildet sind, die je einen Zungenhals (1411), der mit dem Trägerteil (140) verbunden ist, und einen an den Zungenhals (1411) anschliessenden Zungenkopf (1412) aufweisen, der eine Zungenwanne mit einem Wannenraum (1410) bildet, der gegen die Mittelachse (x) hin verschlossen ist und der durch einen der Mittelachse (x) zugewandten Wannenboden (14101) und eine an den Wannenboden (14101) anschliessende und in sich geschlossenen Wannenwand (14102) begrenzt ist.
